(19) Europäisches Patentamt
European Patent Office
Office européen des brevets

(11) **EP 0 788 827 A1**

(12) **EUROPÄISCHE PATENTANMELDUNG**

(43) Veröffentlichungstag:
**13.08.1997 Patentblatt 1997/33**

(51) Int. Cl.⁶: **B01D 53/14**, B01J 8/24,
B01D 47/14, B01D 3/32

(21) Anmeldenummer: **97101829.6**

(22) Anmeldetag: **06.02.1997**

(84) Benannte Vertragsstaaten:
**DE ES FR GB IT**

(30) Priorität: **12.02.1996 DE 19604986**

(71) Anmelder: **HOECHST AKTIENGESELLSCHAFT**
**65929 Frankfurt am Main (DE)**

(72) Erfinder:
• **Sievers, Werner, Dr.**
**65929 Franfurt (DE)**
• **Müller, Günter Dr.**
**65207 Wiesbaden (DE)**

(54) **Kolonne und Verfahren zur Reinigung von lösemittelhaltigen Gasen**

(57) Die Erfindung betrifft einen Wirbelschichtwäscher mit Wirbelkörpern zur Reinigung von Gasen sowie Verfahren zu dessen Betrieb. Die Erfindung ermöglicht es, den Wirbelschichtwäscher so auszulegen bzw. die Verfahren so durchzuführen, daß die Zahl der Wirbelkörper minimiert wird bzw. daß möglichst viel Energie gespart wird, ohne daß dabei die Reinigungsleistung vermindert wird.

**Beschreibung**

Die Erfindung betrifft eine Kolonne zur Behandlung von Gasen, insbesondere zur Entfernung bzw. Rückgewinnung von gasförmigen Begleitstoffen aus den Gasen oder zum Eintrag von gasförmigen Begleitstoffen in die Gase, wobei die Kolonne einen ersten Eingang und einen ersten Ausgang für das Gas und einen zweiten Eingang und einen zweiten Ausgang für eine Waschflüssigkeit aufweist und mindestens eine Schüttung von Wirbelkörpern enthält, und das Gas mit einer einstellbaren Geschwindigkeit in der Kolonne von unten nach oben und die Flüssigkeit im Gegenstrom zum Gas führbar ist.

Die Erfindung betrifft weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt.

Die Erfindung betrifft weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet, wobei sich mindestens eine Wirbelschicht ausbildet, und im Gegenstrom zum Gas eine Flüssigkeit mit einer einstellbaren Geschwindigkeit führt, wobei sich eine effektive Phasengrenzfläche Gas/Flüssigkeit ausbildet.

Die Erfindung betrifft weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt.

Kolonnen und Verfahren der genannten Art sind bekannt, beispielsweise aus der EP-0 456 797 (D1) und der DE 3 613 151 (D2). Solche Kolonnen werden auch als Wirbelschichtwäscher bezeichnet.

In der D1 wird ein Verfahren zur Behandlung von Gasen offenbart, insbesondere zur Entfernung bzw. Rückgewinnung von Begleitbestandteilen in Form von Partikeln, gasförmigen Stoffen und/oder Tropfen, zum Wärmeaustausch zwischen Gasen und Flüssigkeiten und/oder zum Befeuchten von Gasen, in einem Wirbelschichtwäscher mit ellipsoiden Füllkörpen, die durch das zu behandelnde Gas fluidisiert und im Gegenstrom mit einer Waschflüssigkeit beaufschlagt werden. Dieses Verfahren zeichnet sich dadurch aus, daß der Druckgradient in der Wirbelschicht größer als 1500 Pa/m, bezogen auf die Packungshöhe im Ruhezustand ist, und daß die ellipsoiden Füllkörper im fluidisierten Zustand zu einer taumelnden, über den gesamten Bereich des Wirbelschichtwäschers zirkulierenden Bewegung angeregt werden. Weiter werden Wirbelschichtwäscher mit einer oder mehreren Wirbelschichten gezeigt. Ein Nachteil solcher Wäscher bzw. Verfahren besteht darin, daß eine große Zahl von Füllkörpern erforderlich ist, die zudem relativ teuer sind.

Der Erfindung lag daher die Aufgabe zugrunde, Kolonne und Verfahren so zu optimieren, daß möglichst wenig Füllkörper benötigt werden, ohne daß dadurch die Reinigungsleistung der Kolonne bzw. der Verfahren verschlechtert wird. Erfindungsgemäß wird diese Aufgabe durch eine Kolonne der eingangs genannten Art gelöst, die dadurch gekennzeichnet ist, daß die Höhe der Kolonne nach den nachfolgenden Formeln ausgelegt ist:

$$H = k_1 \cdot SZ \cdot SH \tag{1}$$

$$SZ = \frac{y_e - y_a}{(y_e - y^*_e) - (y_a - y^*_a)} \cdot \ln \frac{y_e - y^*_e}{y_a - y^*_a} \qquad (2)$$

$$SH = k_2 \cdot d \cdot F^{k3} \cdot S^{k4} \qquad (3)$$

$$y^*_a = m \cdot x_a \quad , \quad y^*_e = m \cdot x_e ,$$

in denen die Konstanten und Variablen folgende Bedeutung haben:

| | |
|---|---|
| H | Höhe der Kolonne, |
| SZ | Zahl der theoretischen Stufen der Kolonne, |
| SH | Höhe einer theoretischen Stufe, |
| F | Froude-Zahl, $F = u^2_L/(g \cdot d)$, |
| S | Schmidt-Zahl, $S = v_G/D$, |
| d | charakteristische Abmessung der Wirbelkörper, |
| $u_L$ | Geschwindigkeit der Flüssigkeit, |
| g | Erdbeschleunigung, |
| D | Diffusionskoeffizient des gasförmigen Begleitstoffs im Gas, |
| $v_G$ | Kinematische Viskosität des Gases, |
| $y_e$ | Molenbruch des gasförmigen Begleitstoffs im Gas am Gaseingang, |
| $y_a$ | Molenbruch des gasförmigen Begleitstoffs im Gas am Gasausgang. |
| $y^*_e$ | Gleichgewichtsmolenbruch des gasförmigen Begleitstoffs in der Flüssigkeit bei der Temperatur am Gaseingang, |
| $y^*_a$ | Gleichgewichtsmolenbruch des gasförmigen Begleitstoffs in der Flüssigkeit bei der Temperatur am Gasausgang, |
| m | Phasengleichgewichtskonstante, |
| $x_e$ | Molenbruch des gasförmigen Begleitstoffs in der Flüssigkeit am Eingang für die Flüssigkeit, |
| $x_a$ | Molenbruch des gasförmigen Begleitstoffs in der Flüssigkeit am Ausgang für die Flüssigkeit, |
| $k_1$ | Konstante aus dem Bereich von 1,5 bis 2,5, |
| $k_2$ | Konstante aus dem Bereich von 1,5 bis 2,5, |
| $k_3$ | Konstante aus dem Bereich von -1 bis 0, |
| $k_4$ | Konstante aus dem Bereich von 0 bis 1. |

Die Aufgabe wird erfindungsgemäß außerdem durch Verfahren der eingangs genannten Art gelöst, die dadurch gekennzeichnet sind, daß der dynamische Flüssigkeitsinhalt der Kolonne nach folgender Formel eingestellt wird:

$$h = k_5 \cdot \exp\left[ k_6 \cdot u_G^{k7} \cdot \left[ \frac{\rho_G}{\eta_G \cdot (\rho_L - \rho_G) \cdot g} \right]^{K_8} \right]^{k_9} \cdot F^{k_{10}} \qquad (4)$$

wobei die Konstanten und Variablen folgende Bedeutung haben:

| | |
|---|---|
| h | dynamischer Flüssigkeitsinhalt, |
| $u_G$ | Geschwindigkeit des Gases, |
| $\rho_G$ | Dichte des Gases, |

$\eta_G$  dynamische Viskosität des Gases,
$\rho_L$  Dichte der Waschflüssigkeit,
F  Froude-Zahl, $F = u_L^2/g \cdot d$,
$u_L$  Geschwindigkeit der Waschflüssigkeit,
g  Erdbeschleunigung,
d  charakteristische Abmessung der Wirbelkörper,
$k_5$  Konstante aus dem Bereich von 4,0 bis 4,5,
$k_6$  Konstante aus dem Bereich von 0,005 bis 0,015,
$k_7$  Konstante aus dem Bereich von 1,5 bis 2,5,
$k_8$  Konstante aus dem Bereich von 1,5 bis 2,5,
$k_9$  Konstante aus dem Bereich von 0,5 bis 1,0,
$k_{10}$  Konstante aus dem Bereich von 0 bis 0,6,

bzw. daß das Verhältnis von effektiver Phasengrenzfläche zu Oberfläche aller Wirbelkörper nach folgender Formel eingestellt wird:

$$\frac{a}{O} = \left[ k_{12} \cdot \frac{u_G \cdot d}{v_G} + K_{13} \right] \cdot [O \cdot d]^{k_{14}} \cdot \left[ \frac{u_L^{k_7} \cdot \rho_L \cdot d}{\sigma_L} \right]^{k_{15}} \left[ \frac{u_L^{k_7}}{g \cdot d} \right]^{k_{16}} \tag{5}$$

wobei die Konstanten und Variablen wie oben definiert sind oder folgende Bedeutung haben:

a  effektive Phasengrenzfläche Gas/Flüssigkeit,
O  Oberfläche der Wirbelkörper,
$u_L$  Geschwindigkeit der Flüssigkeit,
$\sigma_L$  Oberflächenspannung der Flüssigkeit,
$k_{12}$  Konstante aus dem Bereich von $2,5 \cdot 10^{-4}$ bis $3,5 \cdot 10^{-4}$,
$k_{13}$  Konstante aus dem Bereich von 0,3 bis 0,5,
$k_{14}$  Konstante aus dem Bereich von -0,4 bis -0,6,
$k_{15}$  Konstante aus dem Bereich von 0,4 bis 0,8,
$k_{16}$  Konstante aus dem Bereich von -0,6 bis -0,2,

bzw. daß man den Druckverlust über der Wirbelschicht nach folgender Formel einstellt:

$$\frac{\Delta P}{H_o} = (k_{22} - \varepsilon_o) \cdot (\rho_s - \rho_G) \cdot g \cdot k_{17} \cdot (k_{18} - k_{19} \cdot h^{k_{20}})^{k_{21}} \tag{6}$$

wobei die Variablen oder Konstanten wie oben definiert sind oder folgende Bedeutung haben:

$\Delta P$  Druckverlust über einer Wirbelschicht,
$H_o$  Höhe einer Schicht aus ruhenden Wirbelkörpern,
$\varepsilon_o$  Lückenanteil der ruhenden Schicht,
$\rho_S$  scheinbare Dichte eines Wirbelkörpers,
$k_{17}$  Konstante aus dem Bereich von 0,7 bis 1,1,
$k_{18}$  Konstante aus dem Bereich von 0,8 bis 1,2,
$k_{19}$  Konstante aus dem Bereich von 0,1 bis 0,5,
$k_{20}$  Konstante aus dem Bereich von 0,4 bis 0,8,
$k_{21}$  Konstante aus dem Bereich von -7 bis -3,
$k_{22}$  Konstante aus dem Bereich von 0,8 bis 1,2.

Gegenstand der Erfindung ist somit eine Kolonne zur Behandlung von Gasen, insbesondere zur Entfernung bzw. Rückgewinnung von gasförmigen Begleitstoffen aus den Gasen oder zum Eintrag von gasförmigen Begleitstoffen in die Gase, wobei die Kolonne einen ersten Eingang und einen ersten Ausgang für das Gas und einen zweiten Eingang und einen zweiten Ausgang für eine Waschflüssigkeit aufweist und mindestens eine Schüttung von Wirbelkörpern enthält, und das Gas mit einer einstellbaren Geschwindigkeit in der Kolonne von unten nach oben und die Flüssigkeit im Gegenstrom zum Gas führbar ist, dadurch gekennzeichnet, daß die Höhe der Kolonne nach den nachfolgenden Formeln ausgelegt ist:

$$H = k_1 \cdot SZ \cdot SH \tag{1}$$

$$SZ = \frac{y_e - y_a}{(y_e - y_e^*) - (y_a - y_a^*)} \cdot \ln \frac{y_e - y_e^*}{y_a - y_a^*} \tag{2}$$

$$SH = k_2 \cdot d \cdot F^{k3} \cdot S^{k4} \tag{3}$$

$$y_a^* = m \cdot x_a \quad , \quad y_e^* = m \cdot x_e \,,$$

in denen die Konstanten und Variablen folgende Bedeutung haben:

| | |
|---|---|
| H | Höhe der Kolonne, |
| SZ | Zahl der theoretischen Stufen der Kolonne, |
| SH | Höhe einer theoretischen Stufe, |
| F | Froude-Zahl, $F = u_L^2/(g \cdot d)$, |
| S | Schmidt-Zahl, $S = \nu_G/D$, |
| d | charakteristische Abmessung der Wirbelkörper, |
| $u_L$ | Geschwindigkeit der Flüssigkeit, |
| g | Erdbeschleunigung, |
| D | Diffusionskoeffizient des gasförmigen Begleitstoffs im Gas, |
| $\nu_G$ | Kinematische Viskosität des Gases, |
| $y_e$ | Molenbruch des gasförmigen Begleitstoffs im Gas am Gaseingang, |
| $y_a$ | Molenbruch des gasförmigen Begleitstoffs im Gas am Gasausgang, |
| $y_e^*$ | Gleichgewichtsmolenbruch des gasförmigen Begleitstoffs in der Flüssigkeit bei der Temperatur am Gaseingang, |
| $y_a^*$ | Gleichgewichtsmolenbruch des gasförmigen Begleitstoffs in der Flüssigkeit bei der Temperatur am Gasausgang, |
| m | Phasengleichgewichtskonstante, |
| $x_e$ | Molenbruch des gasförmigen Begleitstoffs in der Flüssigkeit am Eingang für die Flüssigkeit, |
| $x_a$ | Molenbruch des gasförmigen Begleitstoffs in der Flüssigkeit am Ausgang für die Flüssigkeit, |
| $k_1$ | Konstante aus dem Bereich von 1,5 bis 2,5, |
| $k_2$ | Konstante aus dem Bereich von 1,5 bis 2,5, |
| $k_3$ | Konstante aus dem Bereich von -1 bis 0, |
| $k_4$ | Konstante aus dem Bereich von 0 bis 1. |

Die Höhe einer theoretischen Stufe entspricht dabei dem Abstand von zwei theoretischen Kolonnenböden.

Die Zahl der in der realen Kolonne tatsächlich eingebauten Böden (praktische Böden) liegt in der Regel im Bereich von einschließlich SZ bis einschließlich 2 · SZ, je nach den Erfordernissen des konkreten Einzelfalls. Der Abstand zwischen zwei praktischen Böden ist dann entsprechend geringer. Der so definierte Raum zwischen zwei praktischen Kolonnenböden ist vorteilhafterweise höchstens bis etwa zum halben Abstand mit Wirbelkörpern gefüllt, um genügend Raum für die Verwirbelung anzubieten.

Gegenstand der Erfindung ist weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt, dadurch gekennzeichnet, daß der dynamische Flüssigkeitsinhalt der Kolonne nach folgender Formel eingestellt wird:

$$h = k_5 \cdot \exp\left[k_6 \cdot u_G{}^{k7} \cdot \left[\frac{\rho_G{}^{K_8}}{\eta_G \cdot (\rho_L - \rho_G) \cdot g}\right]^{k_9}\right] \cdot F^{k_{10}} \tag{4}$$

wobei die Konstanten und Variablen folgende Bedeutung haben:

$h$ — dynamischer Flüssigkeitsinhalt,
$u_G$ — Geschwindigkeit des Gases,
$\rho_G$ — Dichte des Gases,
$\eta_G$ — dynamische Viskosität des Gases,
$\rho_L$ — Dichte der Waschflüssigkeit,
$F$ — Froude-Zahl, $F = u_L{}^2/g \cdot d$,
$u_L$ — Geschwindigkeit der Waschflüssigkeit,
$g$ — Erdbeschleunigung,
$d$ — charakteristische Abmessung der Wirbelkörper,
$k_5$ — Konstante aus dem Bereich von 4,0 bis 4,5,
$k_6$ — Konstante aus dem Bereich von 0,005 bis 0,015,
$k_7$ — Konstante aus dem Bereich von 1,5 bis 2,5,
$k_8$ — Konstante aus dem Bereich von 1,5 bis 2,5,
$k_9$ — Konstante aus dem Bereich von 0,5 bis 1,0,
$k_{10}$ — Konstante aus dem Bereich von 0 bis 0,6.

Gegenstand der Erfindung ist weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet, wobei sich mindestens eine Wirbelschicht ausbildet, und im Gegenstrom zum Gas eine Flüssigkeit mit einer einstellbaren Geschwindigkeit führt, wobei sich eine effektive Phasengrenzfläche Gas/Flüssigkeit ausbildet, dadurch gekennzeichnet, daß das Verhältnis von effektiver Phasengrenzfläche zu Oberfläche aller Wirbelkörper nach folgender Formel eingestellt wird:

$$\frac{a}{O} = \left[k_{12} \cdot \frac{u_G \cdot d}{v_G} + K_{13}\right] \cdot [O \cdot d]^{k_{14}} \cdot \left[\frac{u_L{}^{k_7} \cdot \rho_L \cdot d}{\sigma_L}\right]^{k_{15}} \left[\frac{u_L{}^{k_7}}{g \cdot d}\right]^{k_{16}} \tag{5}$$

wobei die Konstanten und Variablen wie oben definiert sind oder folgende Bedeutung haben:

$a$ — effektive Phasengrenzfläche Gas/Flüssigkeit,
$O$ — Oberfläche der Wirbelkörper,
$u_L$ — Geschwindigkeit der Flüssigkeit,
$\sigma_L$ — Oberflächenspannung der Flüssigkeit,
$k_{12}$ — Konstante aus dem Bereich von $2,5 \cdot 10^{-4}$ bis $3,5 \cdot 10^{-4}$,
$k_{13}$ — Konstante aus dem Bereich von 0,3 bis 0,5,
$k_{14}$ — Konstante aus dem Bereich von -0,4 bis -0,6,
$k_{15}$ — Konstante aus dem Bereich von 0,4 bis 0,8,
$k_{16}$ — Konstante aus dem Bereich von -0,6 bis -0,2.

Gegenstand der Erfindung ist weiter ein Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt, dadurch gekennzeichnet, daß man den Druckverlust über der Wirbelschicht nach folgender Formel
einstellt:

$$\frac{\Delta P}{H_o} = (k_{22} - \varepsilon_o) \cdot (\rho_s - \rho_G) \cdot g \cdot k_{17} \cdot (k_{18} - k_{19} \cdot h^{k_{20}})^{k_{21}} \qquad (6)$$

wobei die Variablen oder Konstanten wie oben definiert sind oder folgende Bedeutung haben:

$\Delta P$      Druckverlust über einer Wirbelschicht,
$H_o$      Höhe einer Schicht aus ruhenden Wirbelkörpern,
$\varepsilon_o$      Lückenanteil der ruhenden Schicht,
$\rho_S$      scheinbare Dichte eines Wirbelkörpers,
$k_{17}$      Konstante aus dem Bereich von 0,7 bis 1,1,
$k_{18}$      Konstante aus dem Bereich von 0,8 bis 1,2,
$k_{19}$      Konstante aus dem Bereich von 0,1 bis 0,5,
$k_{20}$      Konstante aus dem Bereich von 0,4 bis 0,8,
$k_{21}$      Konstante aus dem Bereich von -7 bis -3,
$k_{22}$      Konstante aus dem Bereich von 0,8 bis 1,2.

Unter "dynamischen Flüssigkeitsinhalt" versteht man hier den in Form von Tropfen, Strahlen oder Schichten vorliegenden, gesamten Flüssigkeitsinhalt der Kolonne. Er wird auf das Volumen der Schichten der ruhenden Wirbelkörper bezogen. Die effektive Phasengrenzfläche a beinhaltet alle für den Stoffaustausch aktiven Flächen, wie die benetzte Oberfläche der Wirbelkörper sowie Tropfen- und Rieselfilmoberflächen.

Als charakteristische Abmessung der Wirbelkörper ist bei Kugeln deren Durchmesser einzusetzen, bei Ellipsoiden oder anderen Wirbelkörpern der sogenannten Sauterdurchmesser $d_s$, der definiert ist als

$$d_S = \frac{6 \cdot \text{Volumen des Wirbelkörpers}}{\text{Oberfläche des Wirbelkörpers}}$$

Die charakteristische Abmessung liegt gemäß D1, D2 üblicherweise im Bereich von 10 bis 100 mm.

Die scheinbare Dichte $\rho_S$ der Wirbelkörper ist definiert als

$$\rho_S = \frac{\text{Gewicht des Wirbelkörpers}}{\text{Volumen des Wirbelkörpers}}$$

Vorteilhafte Varianten der Erfindung sind dadurch gekennzeichnet, daß die Konstanten $k_1$ bis $k_{22}$ Werte aus folgenden Bereichen haben:

$k_1$: 1,9 bis 2,1; $k_2$: 1,9 bis 2,0; $k_3$: -0,2 bis -0,1; $k_4$: 0,5 bis 0,6; $k_5$: 4,2 bis 4,3; $k_6$: 0,009 bis 0,011; $k_7$: 1,9 bis 2,1; $k_8$: 1,9 bis 2,1; $k_9$: 0,6 bis 0,7; $k_{10}$: 0,35 bis 0,45; $k_{12}$: $2,9 \cdot 10^{-4}$ bis $3,0 \cdot 10^{-4}$; $k_{13}$: 0,4 bis 0,5; $k_{14}$: -0,55 bis -0,45; $k_{15}$: 0,62 bis 0,68; $k_{16}$: -0,45 bis -0,35; $k_{17}$: 0,85 bis 0,95; $k_{18}$: 0,95 bis 1,05; $k_{19}$: 0,32 bis 0,38; $k_{20}$: 0,55 bis 0,65; $k_{21}$: -0,55 bis -0,45; $k_{22}$: 0,95 bis 1,05.

Besonders vorteilhafte Varianten der Erfindung sind dadurch gekennzeichnet, daß die Konstanten, $k_1$ bis $k_{22}$ ungefähr folgende Werte haben:

$k_1$: 2; $k_2$: 1,937; $k_3$: -0,157; $k_4$: 0,533; $k_5$: 4,28; $k_6$: 0,01; $k_7$: 2; $k_8$: 2; $k_9$: 2/3; $k_{10}$: 0,4; $k_{12}$: $2,96 \cdot 10^{-4}$; $k_{13}$: 0,44; $k_{14}$: -0,5; $k_{15}$: 0,65; $k_{16}$: -0,4; $k_{17}$: 0,9; $k_{18}$: 1; $k_{19}$: 0,35; $k_{20}$: 0,6; $k_{21}$: -5; $k_{22}$: 1. In ganz besonders vorteilhaften Varianten haben die genannten Konstanten genau die genannten Werte.

In einer weiteren besonders vorteilhaften Ausführungsform der Erfindung werden die erfindungsgemäßen Verfahren in einer erfindungsgemäßen Kolonne durchgeführt.

Kolonne und Verfahren eignen sich besonders zur Reinigung von Abluft, die Industriegase wie $NH_3$, $SO_2$, HF, $NO_x$, CO, $H_2S$ oder gasförmige Begleitstoffe oder Lösemittel wie Alkohole, Ether, Aromate oder Säuren enthält. Eine Einschränkung hinsichtlich der Gase bzw. gasförmigen Stoffe besteht nicht.

Die Herstellung der Kolonne kann nach den üblichen, dem Fachmann geläufigen Methoden erfolgen.

Die Stoffdaten können aus dem Fachmann bekannten Tabellenwerten oder Datenbanken entnommen werden oder aus bekannten Stoffdaten berechnet werden.

Die Vorteile der Erfindung sind im wesentlichen darin zu sehen, daß bei gegebener Reinigungsleistung die Zahl der Füllkörper minimiert ist und daß dadurch Geld und Energie eingespart werden kann. Dies wird im folgenden anhand zweier Beispiele verdeutlicht.

Beispiel 1: Reinigen acetonbeladener Abluft mit Wasser

Es wurde ein Abluftstrom (5726 m$^3$/h), der mit Aceton (25,3 kg/h) beladen war, auf 150 mg/m$^3$ gereinigt. Aceton ist Stoff der Gefahrstoffklasse III, von dem nach der deutschen TA-Luft in der gereinigten Abluft max. 150 mg/m$^3$ zulässig sind.

Als Waschflüssigkeit wurde Wasser (25,2 m$^3$/h) bei Umgebungstemperatur (20°C) verwendet.

Als Wirbelkörper wurden rotationssymmetrische Ellipsoide aus Polypropylen eingesetzt, die ein Achsenverhältnis von 36 mm zu 48 mm hatten.

Die Reinigung wurde in einer Kolonne mit 0,9 m Durchmesser durchgeführt. Die Geschwindigkeiten von Gas und Flüssigkeiten betrugen damit $u_G$ = 2,5 m/s und $u_L$ = 0,011 m/s.

Berechnung der Höhe SH einer theoretischen Stufe:

Mit dem charakteristischen Durchmesser d = 0,043 m eines Wirbelkörpers wurde die Froude-Zahl F = $u_L{}^2$/(g · d) = 0,000287 berechnet. Aus der kinematischen Viskosität der Luft (158,2 · 10$^{-7}$ m$^2$/s) und dem Diffusionskoeffizient von Aceton in Luft (10,7 · 10$^{-6}$ m$^2$/s) wurde die Schmidt-Zahl zu 1,479 berechnet. Die Höhe SH einer theoretischen Stufe ergab sich gemäß der Formel (3) zu SH = 0,37 m. Die Konstanten $k_1$ bis $k_4$ waren dabei $k_1$: 2, $k_2$: 1,937, $k_3$: -0,157, $k_4$: 0,533.

Berechnung der Zahl der theoretischen Trennstufen:

Die Molenbrüche für das Gas lauteten: $y_e$ = 0,001892 kmol/kmol (entsprechend dem Aceton-Stoffstrom von 25,3 kg/h in einem Luftstrom von 5726 m$^3$/h), $y_a$ = 0,000064 kmol/kmol (entsprechend 150 mg/m$^3$).

Die Molenbrüche für die Flüssigkeit lauteten: $x_e$ = 0 (das Wasser war acetonfrei), $x_a$ = 0,00030 kmol/kmol (berechnet aus Gesamt-Massenbilanz um die Kolonne).

Die Henry-Konstante für Aceton-Wasser beträgt bei 20°C He = 1,629 bar, woraus sich bei 1 bar Gesamtdruck die Phasengleichgewichtskonstante m zu 1,629 ergibt.

Die Gleichgewichtsmolenbrüche lauten: $y_e{}^*$ = $x_a$ · m = 0,000489, $y_a{}^*$ = $x_e$ · m = 0 .

Die Zahl SZ der theoretischen Trennstufen der Kolonne ergab sich gemäß Formel (2) zu SZ = 4,2.

Die gesamte Höhe H der Kolonne ergab sich gemäß Formel (1) zu H = 2 SZ SH = 3,1 m . Gewählt werden 8 praktische Böden mit 0,4 m Bodenabstand, jeweils 20 cm hoch gefüllt mit Wirbelkörpern. Die Abstände zwischen den Böden wurden nur zur Hälfte mit Wirbelkörpern gefüllt, um genügend Platz für die Ausbildung der Wirbelschicht zu ermöglichen.

Der dynamische Flüssigkeitsinhalt h wurde gemäß Formel (4) zu h = 0,29 = 29 % berechnet. Hierzu wurden zusätzlich zu den oben bereits angegebenen Zahlenwerten die dynamische Viskosität der Luft (18,48 · 10$^{-6}$ Pas), die Dichte der Luft (1,168 kg/m$^3$) und die Dichte des Wassers (1000 kg/m$^3$) eingesetzt. Die Konstanten $k_5$ bis $k_{10}$ waren: $k_5$: 4,28, $k_6$: 0,01, $k_7$: 2, $k_8$: 2, $k_9$: 2/3, $k_{10}$: 0,4.

Der spezifische Druckverlust wurde mit dem Lückenanteil der ruhenden Schicht (0,41), der scheinbaren Dichte eines Wirbelkörpers (175 kg/m$^3$) und den oben berechneten Größen Formel (6) zu $\Delta p/H_0$ = 1886 Pa/m berechnet. Die Konstanten $k_{17}$ bis $k_{22}$ waren: $k_{17}$: 0,9, $k_{18}$: 1, $k_{19}$: 0,35, $k_{20}$: 0,6, $k_{21}$: - 5, $k_{22}$: 1.

Ergebnis: Die Reinigungsaufgabe wurde mit dem beschriebenen Verfahren mit einem relativ geringen Einsatz an Wirbelkörpern gelöst, wie Messungen an einer Betriebskolonne zeigten.

In dem in D1 beschriebenen Verfahren wird das Verhältnis von Flüssigkeit zu Gas nach der Formel $\Delta p/H_0 v$ = 4,77 + 1 ,8 · (L/G) eingestellt ($\Delta p/H_0$ in Pa/m, v = Gasgeschwindigkeit in m/s, muß größer 2,5 m/s sein, L/G ist das Mengenverhältnis Flüssigkeit zu Gas in liter/m$^3$).

Würde man $\Delta p/H_0$ nach dieser Formel berechnen, ergäbe sich dafür ein Wert von 3170 Pa/m, der wesentlich größer ist als der erfindungsgemäß berechnete Wert von 1886 Pa/m, was u.a. durch eine größere Zahl von Wirbelkörpern und/oder durch eine größere Kolonnenhöhe bedingt ist. Das erfindungsgemäße Verfahren führt deshalb zu einer erheblichen Kosteneinsparung.

Beispiel 2: Verfahren zur Reinigung eines mit Tetrahydrofuran angereicherten Abluftstromes

Anders als in Beispiel 1 lag hier mit Tetrahydrofuran ein Stoff vor, der in Wasser wesentlich schlechter löslich ist als Aceton. Die Rechnungen wurden analog zu Beispiel 1 und mit den selben Werten der Konstanten $k_1$ bis $k_{22}$ durchgeführt.

Eine Kolonne mit 0,9 m Durchmesser wurde mit einer spezifischen Wasserbelastung von 60 m$^3$/m$^2$h (entspricht $u_L$ = 0,0167 m/s) betrieben. Bei einer Gasgeschwindigkeit von 2,5 m/s betrug die Höhe einer theoretischen Stufe gemäß Formel (3) SH = 0,35 m. Der Diffusionskoeffizient von Tetrahydrofuran in der Abluft berechnete sich nach dem Fachmann bekannten Methoden zu 9 · 10$^{-6}$ m$^2$/s. Es wurden Polypropylen-Wirbelkörper mit einem Achsenverhältnis von 36 mm zu 48 mm eingesetzt.

Der Abluftstrom (5700 m$^3$/h) war mit einem Massenstrom von 17 kg Tetrahydrofuran pro h belastet (entspricht $y_e$ = 0,00103 kmol/kmol). Deshalb wurden 5,7 theoretische Trennstufen benötigt, um einen geforderten Reinheitsgrad von 100 mg/m$^3$ zu erreichen. Die Phasengleichgewichtskonstante Tetrahydrofuran-Wasser beträgt bei 1 bar und 20°C m = 4,67.

Die gesamte Höhe der Kolonne ergab sich zu 4 m, wobei 8 praktische Böden mit je 0,25 m Schütthöhe und 0,5 m Bodenabstand gewählt wurden.

Der dynamische Flüssigkeitsinhalt wurde nach Formel (4) zu 0,21 = 21 % berechnet, der spezifische Druckverlust zu 2252 Pa/m. Messungen an einer Betriebskolonne bestätigen dieses Ergebnis.

Analog zu Beispiel 1 berechnet sich $\Delta p/H_0$ nach D1 zu 4190 Pa/m. Das erfindungsgemäße Verfahren führt auch in diesem Beispiel zu erheblichen Kosteneinsparungen.

**Patentansprüche**

1. Kolonne zur Behandlung von Gasen, insbesondere zur Entfernung bzw. Rückgewinnung von gasförmigen Begleitstoffen aus den Gasen oder zum Eintrag von gasförmigen Begleitstoffen in die Gase, wobei die Kolonne einen ersten Eingang und einen ersten Ausgang für das Gas und einen zweiten Eingang und einen zweiten Ausgang für eine Waschflüssigkeit aufweist und mindestens eine Schüttung von Wirbelkörpern enthält, und das Gas mit einer einstellbaren Geschwindigkeit in der Kolonne von unten nach oben und die Flüssigkeit im Gegenstrom zum Gas führbar ist, dadurch gekennzeichnet, daß die Höhe der Kolonne nach den nachfolgenden Formeln ausgelegt ist:

$$H = k_1 \cdot SZ \cdot SH \tag{1}$$

$$SZ = \frac{y_e - y_a}{(y_e - y^*_e) - (y_a - y^*_a)} \cdot \ln \frac{y_e - y^*_e}{y_a - y^*_a} \tag{2}$$

$$SH = k_2 \cdot d \cdot F^{k3} \cdot S^{k4} \tag{3}$$

$$y^*_a = m \cdot x_a \quad , y^*_e = m \cdot x_e ,$$

in denen die Konstanten und Variablen folgende Bedeutung haben:

H Höhe der Kolonne,
SZ Zahl der theoretischen Stufen der Kolonne,
SH Höhe einer theoretischen Stufe,
F Froude-Zahl, $F = u^2_L /(g \cdot d)$ ,
S Schmidt-Zahl, $S = \nu_G/D$ ,
d charakteristische Abmessung der Wirbelkörper,
$u_L$ Geschwindigkeit der Flüssigkeit,
g Erdbeschleunigung,
D Diffusionskoeffizient des gasförmigen Begleitstoffs im Gas,
$\nu_G$ Kinematische Viskosität des Gases,
$y_e$ Molenbruch des gasförmigen Begleitstoffs im Gas am Gaseingang,
$y_a$ Molenbruch des gasförmigen Begleitstoffs im Gas am Gasausgang,
$y^*_e$ Gleichgewichtsmolenbruch des gasförmigen Begleitstoffs in der Flüssigkeit bei der Temperatur am Gaseingang,
$y^*_a$ Gleichgewichtsmolenbruch des gasförmigen Begleitstoffs in der Flüssigkeit bei der Temperatur am Gasausgang,
m Phasengleichgewichtskonstante,

$x_e$   Molenbruch des gasförmigen Begleitstoffs in der Flüssigkeit am Eingang für die Flüssigkeit,

$x_a$   Molenbruch des gasförmigen Begleitstoffs in der Flüssigkeit am Ausgang für die Flüssigkeit,

$k_1$   Konstante aus dem Bereich von 1,5 bis 2,5,

$k_2$   Konstante aus dem Bereich von 1,5 bis 2,5,

$k_3$   Konstante aus dem Bereich von -1 bis 0,

$k_4$   Konstante aus dem Bereich von 0 bis 1.

2. Kolonne nach Anspruch 1, dadurch gekennzeichnet, daß die Konstanten $k_1$ bis $k_4$ Werte aus folgenden Bereichen haben: $k_1$: 1,9 bis 2,1; $k_2$: 1,9 bis 2,0; $k_3$: -0,2 bis -0,1; $k_4$: 0,5 bis 0,6.

3. Kolonne nach Anspruch 1, dadurch gekennzeichnet, daß die Konstanten $k_1$ bis $k_4$ ungefähr folgende Werte haben: $k_1$: 2, $k_2$: 1,937, $k_3$: -0,157, $k_4$: 0,533.

4. Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt, dadurch gekennzeichnet, daß der dynamische Flüssigkeitsinhalt der Kolonne nach folgender Formel eingestellt wird:

$$h = k_5 \cdot \exp\left[ k_6 \cdot u_G^{k7} \cdot \left[ \frac{\rho_G^{K_8}}{\eta_G \cdot (\rho_L - \rho_G) \cdot g} \right]^{k_9} \right] \cdot F^{k_{10}} \qquad (4)$$

wobei die Konstanten und Variablen folgende Bedeutung haben:

$h$   dynamischer Flüssigkeitsinhalt,

$u_G$   Geschwindigkeit des Gases,

$\rho_G$   Dichte des Gases,

$\eta_G$   dynamische Viskosität des Gases,

$\rho_L$   Dichte der Waschflüssigkeit,

$F$   Froude-Zahl, $F = u_L^2 / g \cdot d$,

$u_L$   Geschwindigkeit der Waschflüssigkeit,

$g$   Erdbeschleunigung,

$d$   charakteristische Abmessung der Wirbelkörper,

$k_5$   Konstante aus dem Bereich von 4,0 bis 4,5,

$k_6$   Konstante aus dem Bereich von 0,005 bis 0,015,

$k_7$   Konstante aus dem Bereich von 1,5 bis 2,5,

$k_8$   Konstante aus dem Bereich von 1,5 bis 2,5,

$k_9$   Konstante aus dem Bereich von 0,5 bis 1,0,

$k_{10}$   Konstante aus dem Bereich von 0 bis 0,6.

5. Verfahren nach Anspruch 4, dadurch gekennzeichnet, daß die Konstanten $k_5$ bis $k_{10}$ Werte aus folgenden Bereichen haben: $k_5$: 4,2 bis 4,3; $k_6$: 0,009 bis 0,011; $k_7$: 1,9 bis 2,1; $k_8$: 1,9 bis 2,1; $k_9$: 0,6 bis 0,7; $k_{10}$: 0,35 bis 0,45.

6. Verfahren nach Anspruch 4, dadurch gekennzeichnet, daß die Konstanten $k_5$ bis $k_{10}$ ungefähr folgende Werte haben: $k_5$: 4,28, $k_6$: 0,01, $k_7$: 2, $k_8$: 2, $k_9$: 2/3, $k_{10}$: 0,4.

7. Verfahren zur Behandlung von Gasen, insbesondere zur Entfernung bzw. Rückgewinnung von gasförmiger Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet, wobei sich mindestens eine Wirbelschicht ausbildet, und im Gegenstrom zum Gas eine Flüssigkeit mit einer einstellbaren Geschwindigkeit führt, wobei sich eine effektive Phasengrenzfläche Gas/Flüssigkeit ausbildet, dadurch gekennzeichnet, daß das Verhältnis von effektiver Phasengrenzfläche zu Oberfläche aller Wirbelkörper nach folgender Formel eingestellt wird:

$$\frac{a}{O} = \left[k_{12} \cdot \frac{u_G \cdot d}{v_G} + K_{13}\right] \cdot [O \cdot d]^{k_{14}} \cdot \left[\frac{u_L^{k_7} \cdot \rho_L \cdot d}{\sigma_L}\right]^{k_{15}} \left[\frac{u_L^{k_7}}{g \cdot d}\right]^{k_{16}} \tag{5}$$

wobei die Konstanten und Variablen wie oben definiert sind oder folgende Bedeutung haben:

a     effektive Phasengrenzfläche Gas/Flüssigkeit,
O     Oberfläche der Wirbelkörper,
$u_L$     Geschwindigkeit der Flüssigkeit,
$\sigma_L$     Oberflächenspannung der Flüssigkeit,
$k_{12}$     Konstante aus dem Bereich von $2{,}5 \cdot 10^{-4}$ bis $3{,}5 \cdot 10^{-4}$,
$k_{13}$     Konstante aus dem Bereich von 0,3 bis 0,5,
$k_{14}$     Konstante aus dem Bereich von -0,4 bis -0,6,
$k_{15}$     Konstante aus dem Bereich von 0,4 bis 0,8,
$k_{16}$     Konstante aus dem Bereich von -0,6 bis -0,2.

8. Verfahren nach Anspruch 7, dadurch gekennzeichnet, daß die Konstanten $k_7$, $k_{12}$ bis $k_{16}$ Werte aus folgenden Bereichen haben: $k_7$ : 1,9 bis 2,1; $k_{12}$: $2{,}9 \cdot 10^{-4}$ bis $3{,}0 \cdot 10^{-4}$; $k_{13}$: 0,4 bis 0,5; $k_{14}$: -0,55 bis -0,45; $k_{15}$: 0,62 bis 0,68; $k_{16}$: -0,45 bis -0,35.

9. Verfahren nach Anspruch 7, dadurch gekennzeichnet, daß die Konstanten $k_7$, $k_{12}$ bis $k_{16}$ ungefähr folgende Werte haben:
$k_7$: 2, $k_{12}$: $2{,}96 \cdot 10^{-4}$, $k_{13}$: 0,44, $k_{14}$: -0,5, $k_{15}$: 0,65, $k_{16}$: -0,4.

10. Verfahren zur Behandlung von Gasen, insbesondere zur Entfernung bzw. Rückgewinnung von gasförmigen Begleitstoffen aus den Gasen oder zum Eintrag von gasförmigen Begleitstoffen in die Gase, bei dem man das Gas mit einer einstellbaren Geschwindigkeit von unten nach oben durch eine Kolonne mit Wirbelkörpern leitet und im Gegenstrom dazu eine Flüssigkeit führt, wobei sich mindestens eine Wirbelschicht ausbildet und sich ein dynamischer Flüssigkeitsinhalt einstellt, dadurch gekennzeichnet, daß man den Druckverlust über der Wirbelschicht nach folgender Formel einstellt:

$$\frac{\Delta P}{H_o} = (k_{22} - \varepsilon_o) \cdot (\rho_s - \rho_G) \cdot g \cdot k_{17} \cdot (k_{18} - k_{19} \cdot h^{k_{20}})^{k_{21}} \tag{6}$$

wobei die Variablen oder Konstanten wie oben definiert sind oder folgende Bedeutung haben:

$\Delta P$     Druckverlust über einer Wirbelschicht,
$H_o$     Höhe einer Schicht aus ruhenden Wirbelkörpern,
$\varepsilon_o$     Lückenanteil der ruhenden Schicht,
$\rho_S$     scheinbare Dichte eines Wirbelkörpers,
$k_{17}$     Konstante aus dem Bereich von 0,7 bis 1,1,
$k_{18}$     Konstante aus dem Bereich von 0,8 bis 1,2,
$k_{19}$     Konstante aus dem Bereich von 0,1 bis 0,5,
$k_{20}$     Konstante aus dem Bereich von 0,4 bis 0,8,
$k_{21}$     Konstante aus dem Bereich von -7 bis -3,
$k_{22}$     Konstante aus dem Bereich von 0,8 bis 1,2.

11. Verfahren nach Anspruch 10, dadurch gekennzeichnet, daß die Kosntanten $k_{17}$ bis $k_{22}$ Werte aus folgenden Bereichen haben: $k_{17}$: 0,85 bis 0,95; $k_{18}$: 0,95 bis 1,05; $k_{19}$: 0,32 bis 0,38; $k_{20}$: 0,55 bis 0,65; $k_{21}$: -0,55 bis -0,45; $k_{22}$: 0,95 bis 1,05.

12. Verfahren nach Anspruch 10, dadurch gekennzeichnet, daß die Konstanten $k_{17}$ bis $k_{22}$ ungefähr folgende Werte haben: $k_{17}$: 0,9, $k_{18}$: 1, $k_{19}$: 0,35, $k_{20}$: 0,6, $k_{21}$: -5, $k_{22}$: 1.

13. Verfahren nach einem oder mehreren der Ansprüche 4 bis 12, dadurch gekennzeichnet, daß man das Verfahren in einer Kolonne gemäß Anspruch 1 oder 2 oder 3 durchführt.

**Europäisches Patentamt**

# EUROPÄISCHER RECHERCHENBERICHT

Nummer der Anmeldung

EP 97 10 1829

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D | WO 91 08048 A (VAW VER ALUMINIUM WERKE AG ;EURO MATIC LIMITED (GB)) 13.Juni 1991 * Anspruch 1; Abbildung 1 * --- | 1-13 | B01D53/14 B01J8/24 B01D47/14 B01D3/32 |
| X | EP 0 610 751 A (BAYER AG) 17.August 1994 * Abbildung 1 * --- | 1-13 | |
| A | DE 25 18 878 A (ICI LTD) 20.November 1975 * Abbildung * --- | 1-13 | |
| A | KLAUS SATTLER: "Thermische Trennverfahren" 1995 , VCH VERLAGSGESELLSCHAFT MBH , D-69451 WEINHEIM XP002029493 * Seite 97 - Seite 104 * ----- | 1-13 | |

### RECHERCHIERTE SACHGEBIETE (Int.Cl.6)

B01D
B01J

Der vorliegende Recherchenbericht wurde für alle Patentansprüche erstellt

| Recherchenort | Abschlußdatum der Recherche | Prüfer |
|---|---|---|
| MÜNCHEN | 15.April 1997 | Persichini, C |

### KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)